Europäisches Patentamt

European Patent Office

Office européen des brevets

(19)

(11) Publication number: **0 676 724 A2**

## (12) EUROPEAN PATENT APPLICATION

(21) Application number: **95105054.1**

(22) Date of filing: **04.04.95**

(51) Int. Cl.⁶: **G06T 15/10**

(30) Priority: **05.04.94 JP 67142/94**

(43) Date of publication of application:
**11.10.95 Bulletin 95/41**

(84) Designated Contracting States:
**DE FR GB NL**

(71) Applicant: **KABUSHIKI KAISHA TOSHIBA**
**72, Horikawa-cho,**
**Saiwai-ku**
**Kawasaki-shi,**
**Kanagawa-ken 210,**
**Tokyo (JP)**

(72) Inventor: **Chimoto, Hiroyuki, c/o Int. Prop. Div.**
**Kabushiki Kaisha Toshiba,**
**1-1 Shibaura 1-chome**
**Minato-ku,**
**Tokyo 105 (JP)**

(74) Representative: **Henkel, Feiler, Hänzel &**
**Partner**
**Möhlstrasse 37**
**D-81675 München (DE)**

(54) **Texture mapping method and image processing apparatus.**

(57) A method and apparatus for preventing a textural deformation (swim) which has conventionally occurred are obtained. For this purpose, in texture mapping for a polygon on a three-dimensional space, values of depth information Z are virtually given to all vertex information for two-dimensional texture coordinates to define texture data on a three-dimensional space, and the texture data are virtually arranged on the polygon space (visual point coordinates). Linear transform between each vertex of the polygon and a corresponding vertex of the texture data is performed, and a coordinate transform process is performed to obtain identical sizes and identical coordinate values between the polygon and the texture data. Using the linear transform coefficients and the depth value Z, each pixel on the polygon is linearly transformed, and the inverse transform for obtaining the coordinate values of the corresponding texture data is performed.

FIG. 1

ORIGINAL FIGURE    POLYGON    AFTER DEFORMATION

EP 0 676 724 A2

The present invention relates to an image processing system for performing three-dimensional computer graphics and, more particularly, to a texture mapping method having a characteristic feature in texture mapping and an image processing apparatus.

In recent years, a large number of game machines using three-dimensional computer graphics (3DCG) have been commercially available. Texture mapping in which image data such as a photograph is pasted to a polygon is rarely performed in these game machines, resulting in a lack of reality in a model. A textural deformation(swim) occurs when shapes between texture data and polygon data are greatly different from each other. The textural deformation results in an unnatural image. This is one of the reasons why texture mapping is not performed.

Most of the polygons constituting a model are conventionally polygons based on triangles. For this reason, a popular method of mapping quadrangular texture data is to combine two triangular polygons to constitute the quadrangular texture data.

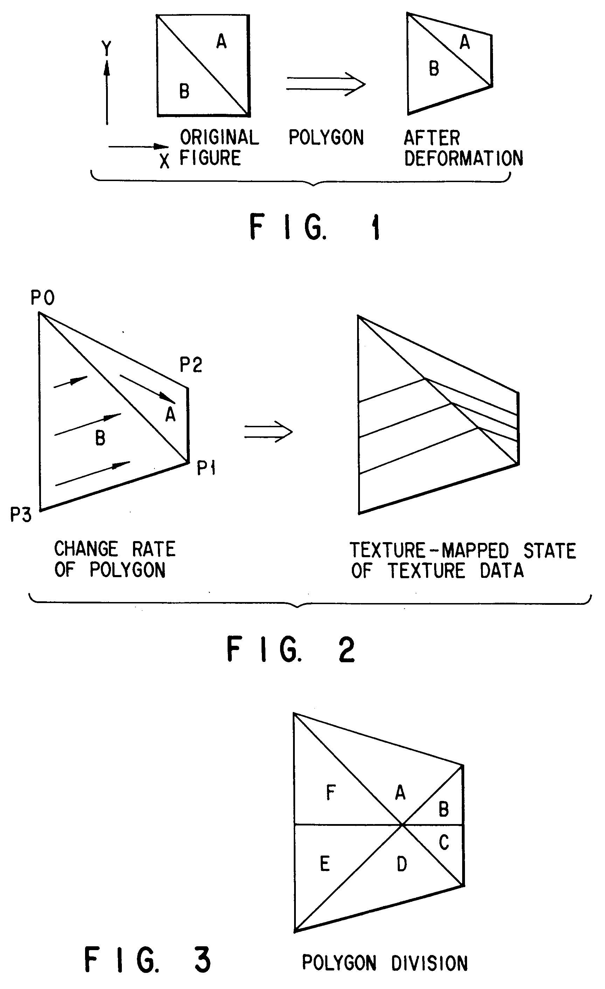

According to this method, however, when a target polygon serving as a destination is deformed into a shape different from texture data, as shown in FIG. 1, a textural swim occurs.

When the target polygon is constituted by two polygons, as shown in FIG. 1, it is possible to obtain change rates of the respective polygons in accordance with a method of obtaining $\underline{x}$ and $\underline{y}$ partial differentials (d/dxdy). For example, when square data is deformed, as shown in FIG. 1, deformation rates are shown in FIG. 2. More specifically, in a polygon A, a change rate for the original figure is of the lower right direction. A vertex p2 of the polygon A in FIG. 2 is moved in the lower direction with respect to the original figure. Similarly, the change rate of a polygon B is of the upper right direction. In this manner, the polygons have a linear independent relationship. Different results are obtained between the polygons A and B which are supposed to have the same change rate.

In texture mapping, source data (texture data) is mapped on a polygon in accordance with the change rate of each polygon. For this reason, actual texture data is expressed to be bent on a boundary line between the two polygons in different directions. A discontinuous plane is formed in the mapping data, which appears as a texture deformation.

For example, assume that texture data represents a plate wall pattern. This data must be drawn to express a depth, but is undesirably drawn in a bent state.

The following conventional countermeasure has been made to eliminate such a textural swim. More specifically, as shown in FIG. 3, a polygon is divided into small areas, i.e., polygon division is performed to reduce a change rate per pixel in each polygon. According to this method, however, the number of polygons is increased, and the arithmetic operation volume for the polygons, such as coordinate transform and light source calculations, are greatly increased. As a result, the geometric operations are further overloaded.

Most of the conventional polygons are based on triangles. However, there is proposed a method of performing texture mapping based on quadrangular polygons on an assumption that texture mapping is a primary concern for some polygons. According to this method, two triangular polygons are used as primitives and combined to each other to cope with quadrangular texture mapping.

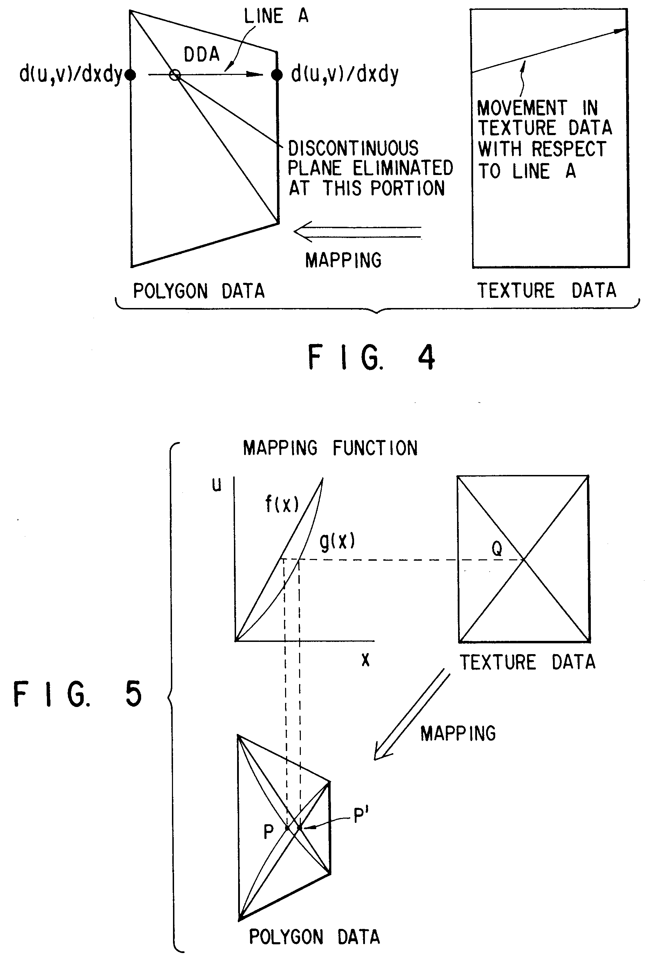

As shown in FIG. 4, two triangular polygons constituting a quadrangle are prepared, and change rates of only edge portions (e.g., black dot portions in FIG. 4) are obtained using $\underline{x}$ and $\underline{y}$ partial differentials (d/dxdy) based on the respective polygons. By this operation, the change rates at the edge portions are determined. Using these values, pixels on a scan line A between the edges are linearly interpolated in accordance with a DDA (Digital Differential Arithmetic) to obtain the change rate at each pixel. Texture mapping is then performed in accordance with this change rate.

In the illustrated example, a line on pixels having change rates corresponding to the line A rises toward the right direction.

In this texture mapping based on a quadrangular polygon, the change rate between the two ends (right and left edges) is used to perform a DDA, so that elimination of a discontinuous plane in the texture data is attempted as compared with texture mapping based on triangular polygons.

Even in this quadrangular polygon, a textural swim occurs due to the following reason.

The concept of the quadrangular texture mapping method is shown in FIG. 5. As shown in FIGS. 4 and 5, interpolation between the edges is performed using linear interpolation function f(x). For this reason, a mapping position for a middle point Q in the texture data in FIG. 5, for example, becomes a point P on the polygon data in accordance with the interpolation function f(x). However, the middle point in the original quadrangular polygon is a point P' represented by an intersection between diagonal lines. The point P' has a position different from that in mapping. For this reason, when texture data such as diagonal lines is to be mapped on quadrangular polygon data, the resultant data represent curves, as shown in FIG. 5, thus causing a textural swim.

2

In actual texture mapping, mapping must be performed using a nonlinear function g(x) as a mapping function. The function g(x) is a function based on a reciprocal 1/Z of a depth (Z value). The interpolation is supposed to be performed using such a function g(x). However, in practice, linear interpolation is conventionally performed due to limitations of arithmetic operation volume and the like.

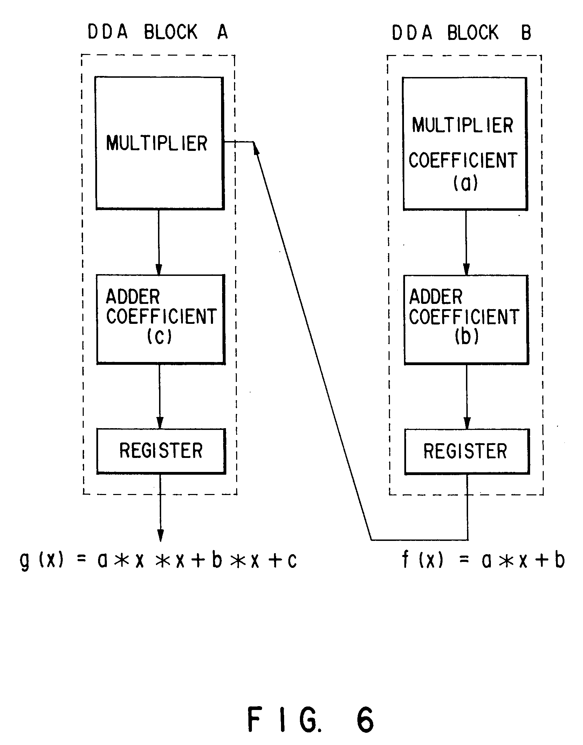

Even in texture mapping using the quadrangular polygon, as shown in FIG. 5, a textural swim occurs in texture mapping. As a method of simulating to solve this problem, a method using a nonlinear DDA (Digital Differential Analysis) is available. This method uses a two-stage DDA. A conventional DDA can cope with only linear transform. Using a two-stage DDA shown in FIG. 6, however, nonlinear transform can be performed. As can be apparent from FIG. 6, a linear DDA is performed in the first stage (DDA block B). This operation can be expressed as follows:

$$f(x) = ax + b \qquad (1)$$

The result for this $\underline{x}$ serves as a multiplication coefficient in the second stage. The following nonlinear transform can be performed as follows:

$$
\begin{aligned}
g(x) &= f(x)^*x + c \\
&= (ax + b)^*x + c \\
&= ax^2 + bx + c \qquad (2)
\end{aligned}
$$

In this case, g(x) is a quadratic function, so that coordinate information of at least three points is required to obtain an approximate thereof. In general, coefficients $\underline{a}$, $\underline{b}$, and $\underline{c}$ are calculated from three points, i.e., two end points and the middle point. According to this method, however, each coefficient must be obtained for each scan line. In addition, to obtain each coefficient, squared data must be divided by squared data, as indicated by equation (3), thus doubling the division cycle. This division must be performed twice. For this reason, a high-speed system cannot be expected and is not suitable for game software which requires interactive processes. In addition, the resultant equation is an approximate, which cannot be subjected to accurate texture mapping.

$$
\begin{aligned}
a &= (Ul - Ur)(Zl^2 - Zr^2)/(2Xr^2ZrZl) \qquad (3) \\
b &= (Ur - Ul)/Xr - aXr \\
c &= Ul
\end{aligned}
$$

where

Ul: the address at the left end of a texture source on a scan line
Ur: the address at the right end of the texture source on the scan line
Xr: the X-coordinate value at the right edge on the scan line
Zl: the Z value at Xl
Zr: the Z value at Xr

The cause of problems on textural swim occurring in texture mapping on a triangular polygon, a quadrangular polygon, or the like is the mapping of a two-dimensional space (texture space) into a three-dimensional space (polygon space). More specifically, since the texture source data does not have depth information (Z value), the textural swim occurs because a pattern deformation occurring in perspective transform cannot be considered at all.

According to the conventional method of preventing the textural swim, for example, in texture mapping using a triangular polygon, the polygon division is performed to suppress the textural swim. This method is equivalent to a method in which a 1/Z curve in perspective transform is divided by the polygon division and linearly approximated to eliminate the textural swim. Use of the nonlinear DDA for eliminating the swim in textural mapping using the quadrangular polygon is equivalent to an approximation to the 1/Z curve. In this manner, the problem on the textural swim results in how the transform by the perspective transform is considered.

A new mapping method is proposed as perspective mapping. This method is considered based on the perspective transform, as it is named "perspective" mapping. Unlike conventional texture mapping, no textural swim occurs in perspective mapping. In this method, perspective transform, i.e., a 1/Z process is performed for each pixel due to the following reason. Polygons constituting a model has an inclination in the Z direction, and the respective pixels have different Z values. For this reason, a 1/Z calculation, i.e., a division must be performed for each pixel. A computer is overloaded by such a division process. Texture mapping in which an actual photograph or the like is pasted on a polygon as texture data to realize a virtual

EP 0 676 724 A2

reality is rarely employed in most of the conventional game machines due to the following reason. If a great difference is present between the shapes of polygon data and texture data in texture mapping, a textural deformation (swim) tends to occur, and the pasted image data may be disturbed. In order to prevent this textural deformation(swim), a method of performing divisions using the Z values of the pixels for each pixel is available. However, the arithmetic operation volume becomes undesirably large.

As described above, conventional texture mapping results in a textural swim or requires a large processing volume for divisions of Z values of the pixels for each pixel. The cause of the textural deformation (swim) is based on an assumption that a deformation caused by perspective transform is not considered. That is, the texture data is two-dimensional data, polygon data as the pasting designation is three-dimensional data, and the texture data is mapped on the polygon data while depth information (Z value) is kept omitted. In this process, the deformation caused by the perspective transform is not considered at all. In addition, perspective mapping is available as a method proposed in consideration of the perspective transform. However, this perspective mapping is a method of performing divisions using Z values of the pixels for each pixel, and therefore the arithmetic operation volume undesirably becomes large.

It is an object of the present invention to provide a texture mapping method and an image processing apparatus, in which an arithmetic operation volume can be greatly reduced, and a textural deformation (swim) which has occurred in a conventional arrangement can be eliminated.

In order to achieve the above object of the present invention, there is provided an image processing method having the coordinate transform step of performing coordinate transform into a display coordinate system on the basis of model information constituted by a polygon stored in a memory device, the arithmetic operation step of obtaining a luminance gradient from luminances of vertices of the polygon, the step of temporarily storing an arithmetic operation result in the arithmetic operation step, the rendering step of performing shading, texture mapping, and the like of the polygon from the arithmetic operation result, the step of storing a rendering result in the rendering step in a memory, and a display control step of reading out the rendering result from the memory and displaying the readout data in a size designated at designated display coordinates, wherein the texture mapping for the polygon on a three-dimensional space comprises the steps of:

virtually giving values of depth information Z to all vertices for two-dimensional texture coordinates to define texture data as a plane in a three-dimensional space and virtually arranging the texture data in a space (visual point coordinates) of the polygon;

performing linear transform between each vertex of the polygon and a corresponding vertex of the texture data in the three-dimensional space to obtain identical sizes and identical coordinate values between the polygon and the texture data; and

after the polygon and the texture data are transformed to be identical to each other, performing linear mapping of each pixel on the polygon using coefficients obtained in the linear transform and the depth value Z of each pixel on the polygon, thereby obtaining coordinate values of corresponding texture data.

According to the above means, the texture coordinates are transformed into three-dimensional coordinates in texture mapping of the three-dimensional computer graphics, and linear mapping from the data plane to the data plane in the same three-dimensional space can be performed, thereby preventing a textural deformation (swim) which has occurred in the conventional arrangement. In addition, the coordinate transform is performed by linear mapping, thereby greatly reducing the arithmetic operation volume.

This invention can be more fully understood from the following detailed description when taken in conjunction with the accompanying drawings, in which:

FIG. 1 is a view showing triangular polygons and their deformation;

FIG. 2 is a view showing change rates of polygons and a deformation in texture mapping;

FIG. 3 is a view showing a polygon division;

FIG. 4 is a view showing a line on which arbitrary pixels are aligned on a quadrangular polygon, and a line on which pixels on texture data corresponding to the line on the quadrangular polygon are aligned;

FIG. 5 is a view for explaining the cause of a textural deformation (swim) occurring in texture mapping on the quadrangular polygon;

FIG. 6 is a view showing a 2-stage DDA system;

FIG. 7A is a view illustrating the basic concept of the present invention;

FIG. 7B is a block diagram showing an image processing apparatus according to the first embodiment of the present invention;

FIG. 8 is a flow chart showing an image processing method according to the first embodiment of the present invention; and

4

FIG. 9 is a flow chart showing an image processing method according to the second embodiment of the present invention.

Preferred embodiments of the present invention will be described with reference to the accompanying drawings.

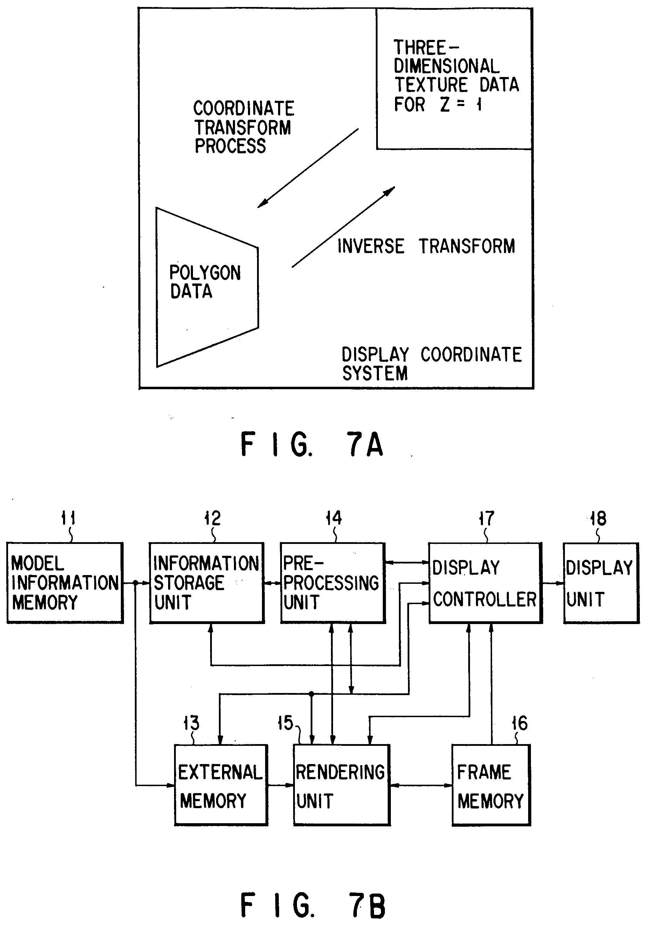

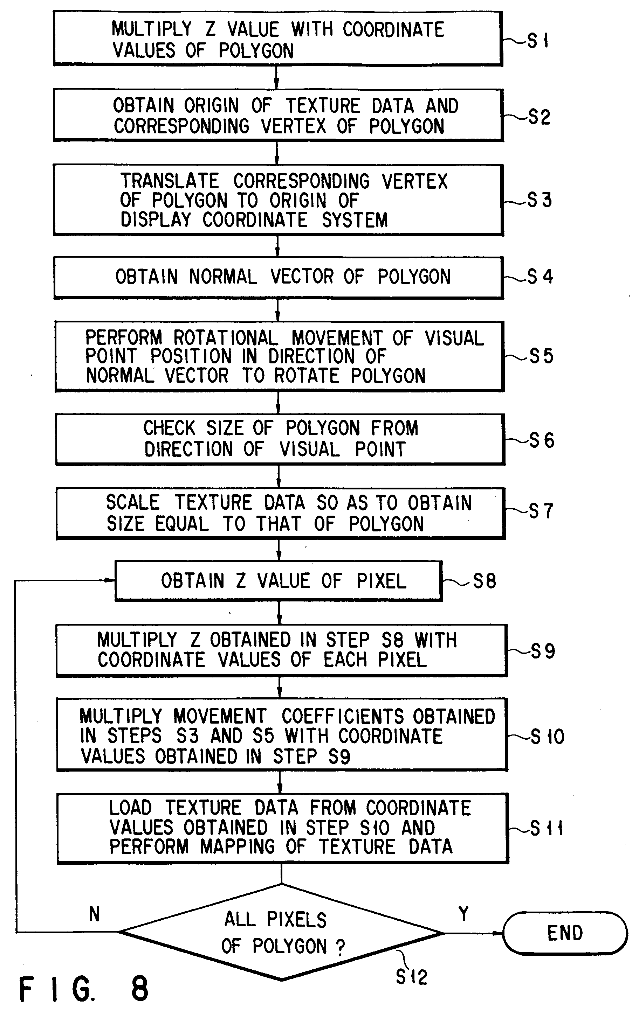

FIG. 7A is a view illustrating the concept of the present invention. FIG. 7B is a block diagram showing the arrangement of an image processing apparatus according to the first embodiment of the present invention. FIG. 8 is a flow chart of processing according to the first embodiment.

As shown in FIG. 7A, according to the present invention, to map texture data on a polygon on a three-dimensional space, values of depth information are virtually given to all vertex information for two-dimensional texture coordinates to define the texture data as a plane in the three-dimensional space. The texture data defined as the plane in this three-dimensional space is virtually arranged in a polygon space (visual point coordinates). Linear transform is performed between each vertex of the polygon and the vertex of the corresponding texture data, thereby setting identical sizes and identical coordinate values between the polygon and the texture data.

Linear mapping is performed for each pixel on the polygon using the linear transform coefficient and the depth value Z to perform inverse transform for obtaining the coordinate values of the corresponding texture data.

Referring to FIG. 7B, a model information memory 11 uses a ROM cassette, a hard disk, a CD-ROM, or the like as a memory medium. The model information memory 11 stores model information (coordinate values, a luminance, and a texture number of each vertex of each polygon on the model coordinate system) based on a polygon. This information is temporarily stored in an information storage unit 12 or an external memory 13. The stored data is then sent to a pre-processing unit 14 and is subjected to the coordinate transform from a body coordinate system to a world coordinate system. The transform result is stored in the information storage unit 12 or the external memory 13. The stored coordinate values are read out again and sent to the pre-processing unit 14 and transformed into data on the visual point coordinate system. The transformed data is stored in the information storage unit 12 or the external memory 13 again. The data transformed into data on the visual coordinate system is read out and transformed into data on the display coordinate system. The transformed data is then stored in the information storage unit 12 or the external memory 13.

On the basis of this result, a rendering unit 15 performs rendering of a polygon. The polygon rendering is an arithmetic rendering process such as shading to perform texture mapping on the basis of each vertex data of a polygon, the luminance data of each vertex, and a texture number, all of which are processed in the pre-processing unit 14 and stored in the information storage unit 12 or the external memory 13.

A processing sequence for performing texture mapping of a polygon will be described below. In a polygon subjected to texture mapping, the Z values of the vertex coordinates of the polygon are multiplied with X and Y as the coordinate values of the vertices (step S1 in FIG. 8; the pre-processing unit 14 in FIG. 7B). This process corresponds to inverse transform of the perspective transform. For example, in a quadrangular polygon, if the coordinates of the respective vertices Pn (n = 1 to 4) are defined as $(x'1,y'1,z'1)$, $(x'2,y'2,z'2)$, $(x'3,y'3,z'3)$, and $(x'4,y'4,z'4)$, the inverse transform of the perspective transform is performed as in equation (4) below:

$$P'n = ((x'1{*}z'1, y'1{*}z'1, 1/z'1), (x'2{*}z'2, y'2{*}z'2, 1/z'2)\ (x'3{*}z'3, y'3{*}z'3, 1/z'3), (x'4{*}z'4, y'4{*}z'4, 1/z'4))$$
$$= ((x1,y1,z1),(x2,y2,z2),(x3,y3,z3),(x4,y4,z4)) \qquad (4)$$

As a result, the vertex coordinates P'n of the polygon are returned to the state prior to the perspective transform.

One of the vertices of the polygon is translated to an origin (step S3 in FIG. 8). In this case, it must be determined which vertex of the polygon is defined as the origin. In principle, the vertex of the polygon on which the vertex serving as the origin of the texture data is mapped is defined as the origin (step S2 in FIG. 8).

The arithmetic operation of this translation is performed using a matrix shown in equation (5). Equation (5) is obtained when a point P1 is translated to the origin.

$$Td = \begin{vmatrix} 1 & 0 & 0 & 0 \\ 0 & 1 & 0 & 0 \\ 0 & 0 & 1 & 0 \\ -x1 & -y1 & -z1 & 1 \end{vmatrix} \qquad \cdots (5)$$

The polygon is translated to the origin using the above result. Each vertex P' is transformed into Pdn indicated by equation (6) below:

$$Pdn = Pn\ Td$$

$$Pn = \begin{vmatrix} 1 & 0 & 0 & 0 \\ 0 & 1 & 0 & 0 \\ 0 & 0 & 1 & 0 \\ -x1 & -y1 & -z1 & 1 \end{vmatrix}$$

$$= ((0,0,0),(x2-x1,y2-y1,z2-z1),$$
$$(x3-x1,y3-y1,z3-z1),(x4-x1,y4-y1,z4-z1))$$
$$= ((0,0,0),(Xd2,Yd2,Zd2),(Xd3,Yd3,Zd3),$$
$$(Xd4,Yd4,Zd4)) \qquad \cdots (6)$$

As a result, as indicated by equation (6), one of the vertices of the polygon is shifted to the origin. A normal vector of this polygon is obtained (step S4 in FIG. 8). To obtain the normal vector, three continuous points are generally selected counterclockwise on the basis of an arbitrary vertex from the vertices of the polygon, and the outer product of end vertex information with respect to the central vertex is obtained. In equation (7), a normal vector N is obtained based on three vertices P4, P1, and P2.

$$N = (Nx,Ny,Nz)$$
$$= (((y1-y4)(z2-z1) - (z1-z4)(y2-y1)), ((z1-z4)(x2-x1) - (x1-x4)(z2-z1)), ((x1-x4)(y2-y1) - (y1-y4)(x2-x1))) \quad (7)$$

Assume that the polygon is virtually observed for the normal vector of equation (7) from the direction of the normal vector. This can be performed by directing the visual point toward the direction of the normal vector. This coordinate transform can be performed by affine transform. In this case, the affine transform involves in only rotational movement (step S5 in FIG. 8).

$$Pnr = Pdn\ Tr\ (X, Y, Z) \qquad (8)$$

where Tr(X,Y,Z) is the rotational movement on the X-, Y-, and Z-axes.

The result obtained in equation (8) becomes vertex data when one of the vertices of the polygon is moved to the origin and the polygon is observed from the direction of the normal direction.

The size is checked from the coordinate values of this polygon (step S6 in FIG. 8). The texture data is scaled to have the same size as that of the polygon (step S7 in FIG. 8). A scaling matrix for vertices Tn (n = 1 to 4) of the texture data is expressed by equation (9). In this case, the vertex information of each texture data is not limited to the conventional X, Y(U,V), but also includes the Z value for Z = 1. The texture data is therefore transformed from the conventional two-dimensional data to three-dimensional data:

$$T'n \;=\; Tn \begin{vmatrix} Sx & 0 & 0 & 0 \\ 0 & Sy & 0 & 0 \\ 0 & 0 & Sz & 0 \\ 0 & 0 & 0 & 1 \end{vmatrix} \qquad \ldots (9)$$

The scaled texture data has the same size as that of the polygon data. The scaled texture data and the polygon data constitute planes in the three-dimensional space, and coordinate mapping therebetween can be performed by linear transform. That is, the polygon coordinates obtained in equation (8) are identical to those obtained in equation (9).

In the above equation, the vertex of each polygon is coordinate-transformed to obtain a correspondence. In practice, in texture mapping, this processing must be performed in units of pixels. Assume one pixel/polygon. In this case, coefficients used in coordinate transform such as translation or rotational movement are kept unchanged because the polygon is defined as a plane. The Z value of each pixel of the polygon is obtained (step S8 in FIG. 7B). This Z value is substituted into equation (4) (step S8 in FIG. 8), and the coordinate values of each pixel are substituted into equation (4) (step S10 in FIG. 8). In addition, equation (8) is also calculated. The resultant coordinate values become coordinate values of the texture data obtained in equation (9). This information is substituted (step S11 in FIG. 8) while a process such as $\alpha$-blending is performed for the pixel of the polygon. This process is performed for all the pixels of the polygon (step S12), thereby performing texture mapping free from any textural deformation (swim). These processes are performed by the arithmetic operations between the information storage unit 12, the external memory 13, the pre-processing unit 14, and the rendering unit 15 shown in FIG. 7B.

According to this embodiment, most of the arithmetic operations are multiplications and additions. A division operation is required for obtaining only a rotational movement coefficient. In addition, a division operation is required to reduce the texture data in scaling. However, the number of divisions can be reduced when quotients are used for the coefficients Sx, Sy, and Sz.

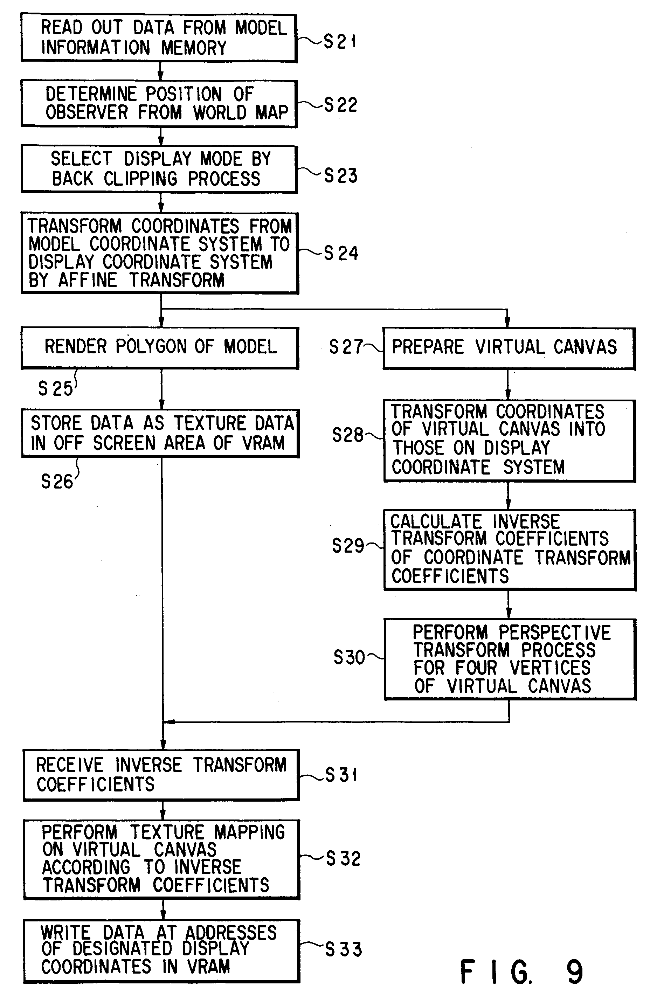

The second embodiment will be described with reference to FIGS. 7B and 9.

Model information (coordinate values, a luminance, a texture, and the like of the vertex of each polygon on the model coordinate system) based on a polygon is stored in a model information memory 11 such as a ROM cassette, a hard disk, or a CD-ROM. The model information memory 11 also stores a world map representing initial values of absolute values (X,Y,Z) of each model. After these data are temporarily stored in an information storage unit 12 or an external memory 13 in an image processor, they are stored in the information storage unit 12.

First of all, the position (visual point coordinates) of an observer is obtained. This can be obtained using world map information upon causing a pre-processing unit 14 to read out the world map from the information storage unit 12 or an external memory 13 (steps S21 and S22).

By a back clipping process, the pre-processing unit 14 selects a display target model from the coordinate values (visual point position) of the observer obtained in the pre-processing unit 14 (step S23). In this process, a clipping window is prepared, and an object which is a model falling within the range of the clipping window and has a distance smaller than a predetermined value from the position of the observer to the model serves as a display object. The transform of the selected model from the model coordinate system (x,y,z) to the visual point coordinate system (X,Y,Z) is performed by the pre-processing unit 14 using affine transform equation (10) on the basis of the model information stored in the information storage unit 12 (step S24):

$$[X\ Y\ Z\ 1] = [x\ y\ z\ 1]\ Tr\ Ts \qquad (10)$$

where
  Tr:   the rotational movement
  Ts:   the scaling

$$Tr = \begin{vmatrix} 1 & 0 & 0 & 0 \\ 0 & \cos X & -\sin X & 0 \\ 0 & \sin X & \cos X & 0 \\ 0 & 0 & 0 & 1 \end{vmatrix} \begin{vmatrix} \cos Y & 0 & \sin Y & 0 \\ 0 & 1 & 0 & 0 \\ \sin Y & 0 & \cos Y & 0 \\ 0 & 0 & 0 & 1 \end{vmatrix} \begin{vmatrix} \cos Z & -\sin Z & 0 & 0 \\ \sin Z & \cos Z & 0 & 0 \\ 0 & 0 & 1 & 0 \\ 0 & 0 & 0 & 1 \end{vmatrix}$$

| Rotational on X-axis | Rotation on Y-axis | Rotation on Z-axis |

The transform result obtained in equation (10) is transferred to the information storage unit 12 or the external memory 13. When the above process is completed in the pre-processing unit 14, each polygon information (coordinate values, a luminance, and texture coordinates, and the like transformed by equation (10)) is transferred from the information storage unit 12 or the external memory 13 to the rendering unit 15.

The rendering unit 15 performs shading of the polygon using the DDA. The pixel data as a result of rendering of the polygon stored as two-dimensional texture data in an OFF screen area of a frame memory 16 (step S25). This two-dimensional texture data serves as data to be pasted as a model on a virtual canvas (to be described later). In this state, the model is set in a flat state without expressing any depth.

On the other hand, while the rendering unit 15 performs rendering, the pre-processing unit 14 uses the world map to calculate the position of a virtual canvas (for the display object model) for pasting, on the virtual canvas, a two-dimensional texture (to be a three-dimensional texture later) obtained from rendering of the polygon (step S27). The calculation method will be described below.

X- and Y-direction maximum and minimum values of all the polygon data of the model which are coordinate-transformed by the pre-processing unit 14 are obtained. A virtual canvas having the same size as that or part of the texture model is prepared as a polygon primitive on the basis of the maximum and minimum values. If a polygon is based on triangular polygons, a virtual canvas is prepared by combining two polygons. The coordinate values (x,y,z) of this virtual canvas are transformed into those on the display coordinate system (X,Y,Z) using equation (11):

$$[X\ Y\ Z\ 1] = [x\ y\ z\ 1]\ Td\ Ts \tag{11}$$

where
  Td:    the rotational movement
  Ts:    the scaling

$$Td = \begin{vmatrix} 1 & 0 & 0 & 0 \\ 0 & 1 & 0 & 0 \\ 0 & 0 & 1 & 0 \\ dx & dy & dz & 1 \end{vmatrix}, \quad Tr = \begin{vmatrix} \cos Z & -\sin Z & 0 & 0 \\ \sin Z & \cos Z & 0 & 0 \\ 0 & 0 & 1 & 0 \\ 0 & 0 & 0 & 1 \end{vmatrix}$$

| Translation | Rotation on Z-axis |

In this case, the coefficients Tr and Td are transferred to a display controller 17. The pre-processing unit 14 performs perspective transform on the basis of the result (X,Y,Z) obtained by equation (11). This perspective transform is performed for the four vertices of the virtual canvas using a distance Z' from the position of the observer (visual point position) obtained for back clipping to the model (steps S28 to S30). The transform result obtained upon the perspective transform on the basis of the result obtained in equation (11) is transferred to the information storage unit 12 or the external memory 13. By this transform, the virtual canvas is set in a state in which a depth is expressed.

When the coordinate and perspective transform operations of the virtual canvas and conversion of the model into texture data are completed, the coordinate values of the virtual canvas are transferred to the display controller 17. In the display controller 17, the texture pattern of the two-dimensional texture data of the target model is deformed by the texture DDA on the basis of the coordinate values of the virtual canvas, and texture mapping is performed on the virtual canvas. The resultant data is written in the virtual canvas coordinates of the ON screen area of the frame memory 16. The texture model is solid-modeled and expressed in the virtual canvas. The data written in the frame memory 16 is controlled by the display controlled 17 and displayed on the display unit (steps S31 to S33).

In the second embodiment, since the size of the virtual canvas is equivalent to that of the texture data, the canvas is prepared at the origin (the same coordinate values as those of the texture data), and a depth value Z (Z = 1) is given to the two-dimensional texture data as in the first embodiment, thereby performing the inverse transform of the coordinate transform on the display coordinate system. Therefore, texture mapping free from the textural deformation can be performed (step S29).

The inverse transform of equation (12) representing the coordinate transform for transforming data on the basic virtual canvas located at the origin into data on the display coordinate system is represented by equation (13). The coefficients of this equation can be calculated using the coordinate transform coefficients sent from the pre-processing unit 14 because the process is so simple that the sign of the coefficients obtained for the coordinate transform in the pre-processing unit 14 is inverted (S31).

$$[X_q, Y_q, Z_q, 1] = [X_p, Y_p, Z_p] \: T_d \: T_{rz}/(Z_q + Z_t) \qquad (12)$$

where

| | |
|---|---|
| $X_q, Y_q, Z_q$: | the coordinate values after the transform |
| $X_p, Y_p, Z_p$: | the coordinate values before the transform |
| $T_d$: | the affine transform (translation) |
| $T_{rz}$: | the affine transform (rotational movement about the Z-axis) |
| $Z_t$: | the distance from the visual point to the model |

$$[X_p, Y_p, Z_p, 1] = [X_q, Y_q, Z_q, 1]^*(Z_q + Z_t) T_{rz}(-1) T_d(-1) \qquad (13)$$

where

(-1): the inverse transform

Equation (13) is written as a matrix as follows:

$$[X_p, Y_p, Z_p, 1] = [x_q, Y_q, Z_q, 1]^*(Z_q + Z_t) \begin{vmatrix} \cos(Q_z) & \sin(Q_z) & 0 & 0 \\ -\sin(Q_z) & \cos(Q_z) & 0 & 0 \\ 0 & 0 & 1 & 0 \\ -dx & -dy & 0 & 1 \end{vmatrix}$$

$$\cdots \: (14)$$

In this manner, by the inverse transform represented by equation (14), the coordinates can be transformed from the virtual canvas at the display position on the display coordinate system into the basic virtual canvas (steps S32 and S33). Equation (14) is calculated while the Z values of the respective pixels on the virtual canvas are calculated by the display controller 17 or the rendering unit 15 in accordance with the DDA operation.

According to the above embodiment, the size of the texture data matches the size of the virtual canvas, and the texture data matches data in the same space as that where a polygon is virtually present. For this reason, when the inverse transform of the coordinate transform is performed for the virtual canvas, so that the virtual canvas can be caused to correspond to the coordinate values of the texture data. For this reason, the operation can be performed in such a manner that the sign of the coordinate transform values associated with the movement of the virtual canvas is inverted. The arithmetic operation volume associated with the inverse transform is almost zero. In addition, the arithmetic operations require only multiplications and additions, thereby achieving a high-speed operation.

The present invention is not limited to the above embodiments. For example, in the first embodiment, the display controller and the rendering unit may be arranged as part of the pre-processing unit. In the second embodiment, in the inverse transform, depth information of each pixel may be calculated in the rendering unit beforehand, the calculation result may be stored in a frame memory, and the storage value may be read out to perform the inverse transform. Various changes and modifications may be made within the spirit and scope of the invention.

As has been described above, according to the present invention, a textural deformation (swim) which occurs in conventional texture mapping does not occur, and an increase in arithmetic operation volume which is caused by divisions for pixels in perspective transform can be suppressed. As a result of a computer simulation, the method of the present invention was found to require about 1/16 the arithmetic operation volume of the conventional method.

**Claims**

1. An image processing method having the coordinate transform step of performing coordinate transform into a display coordinate system on the basis of model information constituted by a polygon stored in a memory device, the arithmetic operation step of obtaining a luminance gradient from luminances of vertices of the polygon, the step of temporarily storing an arithmetic operation result in the arithmetic operation step, the rendering step of performing shading, texture mapping, and the like of the polygon from the arithmetic operation result, the step of storing a rendering result in the rendering step in a memory, and a display control step of reading out the rendering result from said memory and displaying the readout data in a size designated at designated display coordinates, wherein the texture mapping for the polygon on a three-dimensional space, comprising the steps of:

   (S1 - S6) virtually giving values of depth information Z to all vertices for two-dimensional texture coordinates to define texture data as a plane in a three-dimensional space and virtually arranging the texture data in a space (visual point coordinates) of the polygon;

   (S7) performing linear transform between each vertex of the polygon and a corresponding vertex of the texture data in the three-dimensional space to obtain identical sizes and identical coordinate values between the polygon and the texture data; and

   (S8 - S12) after the polygon and the texture data are transformed to be identical to each other, performing linear mapping of each pixel on the polygon using coefficients obtained in the linear transform and the depth value Z of each pixel on the polygon, thereby obtaining coordinate values of corresponding texture data.

2. A method according to claim 1, characterized in that the Z values given to the two-dimensional texture coordinates to transform the texture data into three-dimensional texture data are Z values on a projection plane.

3. An image processing apparatus having coordinate transform means for performing coordinate transform into a display coordinate system on the basis of model information constituted by a polygon stored in a memory device, an arithmetic operation unit for obtaining a luminance gradient from luminances of vertices of the polygon, means for storing an arithmetic operation result from said arithmetic operation unit, a rendering unit for performing shading, texture mapping, and the like of the polygon from the arithmetic operation result, means for storing a rendering result from said rendering unit in a memory, and a display controller having a display function of reading out the rendering result from said memory and displaying the readout data in a size designated at designated display coordinates, wherein means for performing said texture mapping for the polygon on a three-dimensional space, comprising:

   means (12, 13, 14, S1) for virtually giving depth information Z to all vertices for two-dimensional texture coordinates;

   means (14, 15, S2 - S6) for giving the depth information to each vertex of texture data to define the texture data as a plane in a three-dimensional space and virtually arranging the texture data in a space (visual point coordinates) of the polygon;

   arithmetic operation means (14, 15, S7) for moving the polygon and the texture data to the same three-dimensional space, performing linear transform between each vertex of the polygon and a corresponding vertex of the texture data in the three-dimensional space to obtain identical sizes and identical coordinate values between the polygon and the texture data; and

   means (14, 15, S8 - S12) for, after the polygon and the texture data are transformed to be identical to each other, performing linear mapping of each pixel on the polygon using coefficients of the linear transform and the depth value Z of each pixel on the polygon, thereby obtaining coordinate values of corresponding texture data.

4. An apparatus according to claim 3, characterized in that the Z values given to the two-dimensional texture coordinates to transform the texture data into three-dimensional texture data are Z values on a projection plane.

5. An apparatus according to claim 3, characterized in that the Z value of each pixel of the polygon is calculated in accordance with a DDA.

6. An image processing method of performing a coordinate transform process of performing coordinate transform into a display coordinate system on the basis of model information constituted by a polygon stored in a memory device, an arithmetic operation process of obtaining a luminance gradient from luminance of vertices of the polygon, a process of storing an arithmetic operation result in the arithmetic operation process, a rendering process of performing shading, texture mapping, and the like of the polygon from the arithmetic operation result, a first storage process of storing a rendering result in the rendering process in a memory, and a display process of reading out the rendering result from said memory and displaying the readout data in a size designated at designated display coordinates, wherein said method of performing texture mapping for the polygon on a three-dimensional space comprises

virtually giving a Z (depth information) value as "1" to vertex information for two-dimensional texture coordinates to define texture data as a plane on the three-dimensional space, virtually arranging the texture data on a polygon space (visual point coordinates), calculating coordinate transform coefficients such that normal directions coincide with each other between planes respectively formed by the polygon and the texture data, transforming each pixel using the transform coefficients, multiplying the Z value with each pixel, and linearly mapping the texture data using resultant coordinate values.

ORIGINAL FIGURE  POLYGON  AFTER DEFORMATION

# F I G.  1

CHANGE RATE OF POLYGON

TEXTURE-MAPPED STATE OF TEXTURE DATA

# F I G.  2

POLYGON DIVISION

# F I G.  3

F I G. 4

F I G. 5

DDA BLOCK A

DDA BLOCK B

MULTIPLIER

MULTIPLIER
COEFFICIENT
(a)

ADDER
COEFFICIENT
(c)

ADDER
COEFFICIENT
(b)

REGISTER

REGISTER

g (x) = a ✳ x ✳ x + b ✳ x + c

f (x) = a ✳ x + b

F I G. 6

14

F I G. 7A

F I G. 7B

```
┌─────────────────────────────────────────┐
│  MULTIPLY  Z  VALUE  WITH  COORDINATE    │─ S1
│  VALUES  OF  POLYGON                      │
└─────────────────────────────────────────┘
                    │
                    ▼
┌─────────────────────────────────────────┐
│  OBTAIN  ORIGIN  OF  TEXTURE  DATA  AND  │─ S2
│  CORRESPONDING  VERTEX  OF  POLYGON       │
└─────────────────────────────────────────┘
                    │
                    ▼
┌─────────────────────────────────────────┐
│  TRANSLATE  CORRESPONDING  VERTEX         │
│  OF  POLYGON  TO  ORIGIN  OF             │─ S3
│  DISPLAY  COORDINATE  SYSTEM             │
└─────────────────────────────────────────┘
                    │
                    ▼
┌─────────────────────────────────────────┐
│  OBTAIN  NORMAL  VECTOR  OF  POLYGON      │─ S4
└─────────────────────────────────────────┘
                    │
                    ▼
┌─────────────────────────────────────────┐
│  PERFORM  ROTATIONAL  MOVEMENT  OF  VISUAL│
│  POINT  POSITION  IN  DIRECTION  OF       │─ S5
│  NORMAL  VECTOR  TO  ROTATE  POLYGON      │
└─────────────────────────────────────────┘
                    │
                    ▼
┌─────────────────────────────────────────┐
│  CHECK  SIZE  OF  POLYGON  FROM           │─ S6
│  DIRECTION  OF  VISUAL  POINT             │
└─────────────────────────────────────────┘
                    │
                    ▼
┌─────────────────────────────────────────┐
│  SCALE  TEXTURE  DATA  SO  AS  TO  OBTAIN │─ S7
│  SIZE  EQUAL  TO  THAT  OF  POLYGON       │
└─────────────────────────────────────────┘
                    │
                    ▼
┌─────────────────────────────────────────┐
│  OBTAIN  Z  VALUE  OF  PIXEL             │─ S8
└─────────────────────────────────────────┘
                    │
                    ▼
┌─────────────────────────────────────────┐
│  MULTIPLY  Z  OBTAINED  IN  STEP  S8  WITH│─ S9
│  COORDINATE  VALUES  OF  EACH  PIXEL      │
└─────────────────────────────────────────┘
                    │
                    ▼
┌─────────────────────────────────────────┐
│  MULTIPLY  MOVEMENT  COEFFICIENTS  OBTAINED│
│  IN  STEPS  S3  AND  S5  WITH  COORDINATE │─ S10
│  VALUES  OBTAINED  IN  STEP  S9           │
└─────────────────────────────────────────┘
                    │
                    ▼
┌─────────────────────────────────────────┐
│  LOAD  TEXTURE  DATA  FROM  COORDINATE    │
│  VALUES  OBTAINED  IN  STEP  S10  AND     │─ S11
│  PERFORM  MAPPING  OF  TEXTURE  DATA      │
└─────────────────────────────────────────┘
                    │
                    ▼
          ◇─────────────────◇
     N  ◇   ALL  PIXELS      ◇  Y
   ────◇    OF  POLYGON ?    ◇────▶  ( END )
          ◇─────────────────◇
                  S12
```

# F I G.  8

READ OUT DATA FROM MODEL INFORMATION MEMORY — S21

DETERMINE POSITION OF OBSERVER FROM WORLD MAP — S22

SELECT DISPLAY MODE BY BACK CLIPPING PROCESS — S23

TRANSFORM COORDINATES FROM MODEL COORDINATE SYSTEM TO DISPLAY COORDINATE SYSTEM BY AFFINE TRANSFORM — S24

RENDER POLYGON OF MODEL — S25

PREPARE VIRTUAL CANVAS — S27

STORE DATA AS TEXTURE DATA IN OFF SCREEN AREA OF VRAM — S26

TRANSFORM COORDINATES OF VIRTUAL CANVAS INTO THOSE ON DISPLAY COORDINATE SYSTEM — S28

CALCULATE INVERSE TRANSFORM COEFFICIENTS OF COORDINATE TRANSFORM COEFFICIENTS — S29

PERFORM PERSPECTIVE TRANSFORM PROCESS FOR FOUR VERTICES OF VIRTUAL CANVAS — S30

RECEIVE INVERSE TRANSFORM COEFFICIENTS — S31

PERFORM TEXTURE MAPPING ON VIRTUAL CANVAS ACCORDING TO INVERSE TRANSFORM COEFFICIENTS — S32

WRITE DATA AT ADDRESSES OF DESIGNATED DISPLAY COORDINATES IN VRAM — S33

F I G. 9